# EUROPÄISCHE PATENTANMELDUNG

(11) **EP 1 777 387 A1**
(43) Veröffentlichungstag der Anmeldung: **25.04.2007**
(21) Anmeldenummer: 05109716.0
(22) Anmeldetag: 19.10.2005
(51) Int. Cl.: F02B 37/013, F02B 37/22, F02B 37/24, F02B 37/16, F01N 3/023

(54) **Aufgeladene Brennkraftmaschine und Verfahren zum Betreiben einer derartigen Brennkraftmaschine**

(71) Anmelder: Ford Global Technologies, LLC, Dearborn, MI 48126 (US)
(72) Erfinder: Paffrath, Holger, 50259, Pulheim (DE)
(74) Vertreter: Drömer, Hans-Carsten

(57) **Zusammenfassung**

Die Erfindung betrifft eine aufgeladene Brennkraftmaschine (1) mit mindestens zwei Zylindern (3), die in der Art konfiguriert sind, daß sie zwei Gruppen (3',3") mit jeweils mindestens einem Zylinder (3) bilden, wobei beide Zylindergruppen (3',3") jeweils mit einer Abgasleitung (4',4") ausgestattet sind, und mit zwei Abgasturboladern (6,7), deren Turbinen (6a,7a) parallel geschaltet sind, indem eine erste Turbine (6a) eines ersten Abgasturboladers (6) in der Abgasleitung (4') des ersten Zylindergruppe (3') angeordnet ist und eine zweite Turbine (7a) eines zweiten Abgasturboladers (7) in der Abgasleitung (4") der zweiten Zylindergruppe (3") angeordnet ist, und deren Verdichter (6b,7b) in Reihe gesehaltet sind, indem ein erster Verdichter (6b) des ersten Abgasturboladers (6) in einer Gesamtansaugleitung (2), die zur Versorgung der Brennkraftmaschine (1) mit Frischluft bzw. Frischgemisch dient, angeordnet ist und em zweiter Verdichter (7b) des zweiten Abgasturboladers (7) stromabwärts des ersten Verdichters (6b) in dieser Gesamtansaugleitung (2) angeordnet ist.

## Beschreibung

Die Erfindung betrifft eine aufgeladene Brennkraftmaschine mit mindestens zwei Zylindern, die in der Art konfiguriert sind, daß sie zwei Gruppen mit jeweils mindestens einem Zylinder bilden, wobei beide Zylindergruppen jeweils mit einer Abgasleitung ausgestattet sind, und mit zwei Abgasturboladern, deren Turbinen parallel geschaltet sind, indem eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist, und deren Verdichter in Reihe geschaltet sind, indem ein erster Verdichter des ersten Abgasturboladers in einer Gesamtansaugleitung, die zur Versorgung der Brennkraftmaschine mit Frischluft bzw. Frischgemisch dient, angeordnet ist und ein zweiter Verdichter des zweiten Abgasturboladers stromabwärts des ersten Verdichters in dieser Gesamtansaugleitung angeordnet ist.

Des weiteren betrifft die Erfindung ein Verfahren zum Betreiben einer aufgeladenen Brennkraftmaschine der oben genannten Art.

Im Rahmen der vorliegenden Erfindung umfaßt der Begriff Brennkraftmaschine sowohl Dieselmotoren als auch Ottomotoren, wobei die folgenden Ausführungen sich grundsätzlich auf den Einsatz eines Dieselmotors beziehen.

In den letzten Jahren hat sich eine Entwicklung hin zu kleinen, hochaufgeladenen Motoren vollzogen, wobei die Aufladung in erster Linie ein Verfahren zur Leistungssteigerung ist, bei dem die für den motorischen Verbrennungsprozeß benötigte Luft verdichtet wird. Die wirtschaftliche Bedeutung dieser Motoren für die Automobilbauindustrie nimmt weiter ständig zu.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Vorteile des Abgasturboladers beispielsweise im Vergleich zu mechanischen Ladern bestehen darin, daß keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Ein typischer Vertreter der kleinen, hochaufgeladenen Motoren ist eine Brennkraftmaschine mit Abgasturboaufladung, bei der die Abgasenergie zur Verdichtung der Verbrennungsluft eingesetzt wird, und die zusätzlich über eine Ladeluftkühlung verfügt, mit der die komprimierte Verbrennungsluft vor Eintritt in den Brennraum runtergekühlt wird, was die Zylinderfiillung weiter verbessert.

Wie oben bereits ausgeführt, hat in den letzten Jahren der Einsatz von Abgasturboladern stark zugenommen, wobei ein Ende dieser Entwicklung nicht abzusehen ist. Die Gründe hierfür sind vielschichtig und werden im folgenden kurz dargelegt.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck pₘₑ gesteigert werden.

Die Aufladung ist ein geeignetes Mittel, bei unverändertem Hubraum die Leistung einer Brennkraftmaschine zu steigern, oder bei gleicher Leistung den Hubraum zu reduzieren. In beiden Fällen fährt die Aufladung zu einer Erhöhung der Bauraumleistung und zu einer günstigeren Leistungsmasse. Bei gleichen Fahrzeugrandbedingungen läßt sich so das Lastkollektiv hin zu höheren Lasten verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, den Kraftstoffverbrauch zu minimieren, d.h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch prinzipbedingt ab. Die Aufladung eignet sich daher ebenfalls zur Reduzierung der Schadstoffemissionen. Um die zukünftigen Grenzwerte für Schadstoffemissionen einzuhalten, sind aber darüber hinaus weitere Maßnahmen erforderlich, auf die weiter unten noch im Detail eingegangen werden wird, da ihnen im Rahmen der vorliegenden Erfindung eine wesentliche Rolle zukommt. Zunächst sollen aber die grundsätzlichen Probleme bei der Auslegung des Abgasturboladers aufgezeigt werden, die bei sämtlichen anderen Maßnahmen mit in Betracht zu ziehen sind.

Schwierigkeiten bereitet die Auslegung des Abgasturboladers, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Dieser Effekt ist unerwünscht, da der Fahrer im Vergleich mit einem nicht aufgeladenen Motor gleicher Maximalleistung auch im unteren Drehzahlbereich ein entsprechend großes Drehmoment erwartet. Das sogenannte Turboloch bei niedrigen Drehzahlen zählt daher auch zu den gravierendsten Nachteilen der Abgasturboaufladung.

Verständlich wird dieser Drehmomentabfall, wenn berücksichtigt wird, daß das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, daß zu niedrigeren Drehzahlen hin das Ladedruckverhältnis ebenfalls abnimmt, was gleichbedeutend ist mit einem Drehmomentabfall.

An dieser Stelle sei angemerkt, daß die Begriffe "niedrige Drehzahlen" und "hohe Drehzahlen" im Rahmen der vorliegenden Erfindung dahingehend zu verstehen sind, daß unter den Begriff "niedrige Drehzahlen" das gesamte Drehzahlband subsumiert wird, welches bei der Absolvierung der gesetzlich vorgeschriebenen Tests zur Bestimmung der Schadstoffemissionen durchlaufen wird.

Grundsätzlich kann dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis führen die beschriebenen Zusammenhänge häufig dazu, daß ein möglichst kleiner Abgasturbolader d.h. ein Abgasturbolader mit einem möglichst kleinen Turbinenquerschnitt eingesetzt wird. Letztendlich wird damit dem Drehmomentabfall nur in geringem Maße entgegengewirkt und der Drehmomentabfall weiter zu geringeren Drehzahlen hin verschoben. Zudem sind dieser Vorgehensweise d. h. der Verkleinerung des Turbinenquerschnittes Grenzen gesetzt, da die gewünschte Aufladung und Leistungssteigerung auch bei hohen Drehzahlen uneingeschränkt und in dem gewünschten Maße möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung, wobei die Abgasabblasung mittels Ladedruck oder mittels Abgasdruck gesteuert werden kann. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat aber - wie bereits oben angesprochen - den Nachteil, daß das Aufladeverhalten bei höheren Drehzahlen Wirkungsgrad- und Regelbarkeitseinbußen aufweist.

Grundsätzlich ist auch eine kleine Auslegung des Turbinenquerschnittes zusammen mit einer Ladeluftabblasung möglich, wobei diese Variante aufgrund der energetischen Nachteile der Ladeluftabblasung d. h. der Verschlechterung des effektiven Wirkungsgrades selten zum Einsatz kommt, und die vorhandenen Verdichter an ihre Fördergrenze geraten können und somit die gewünschte Leistung nicht mehr dargestellt werden kann.

Bei Dieselmotoren kann eine kleine Auslegung des Turbinenquerschnittes und die gleichzeitige Begrenzung des Ladedruckes durch Abregelung der Brennstoffmasse bei hohen Drehzahlen zielführend sein. Die Möglichkeiten zur Leistungssteigerung mittels Abgasturboaufladung werden dabei aber nicht voll ausgeschöpft.

Der Abgasturbolader kann aber auch - auf hohe Drehzahlen abgestimmt - mit einem großen Turbinenquerschnitt ausgelegt werden. Dabei wird das Saugsystem dann in der Weise gestaltet, daß durch Wellenvorgänge bei niedrigen Drehzahlen eine dynamische Aufladung erfolgt. Nachteilig sind dabei der hohe Bauaufwand und das träge Verhalten bei Drehzahländerungen.

Die Drehmomentcharakteristik einer aufgeladenen Brennkraftmaschine kann des weiteren durch eine Registeraufladung verbessert werden. Dabei werden mehrere parallel geschaltete Turbolader mit entsprechend kleinen Turbinenquerschnitten mit steigender Last zugeschaltet.

Mehrere Turbolader sind hinsichtlich der Verbesserung der Drehmomentcharakteristik auch dann zielführend, wenn sie wie bei einer Brennkraftmaschine gemäß dem Oberbegriff des Anspruchs 1 d. h. der gattungsbildenden Art konfiguriert werden. Die Zylinder der Brennkraftmaschine werden hierzu in zwei Zylindergruppen, die jeweils mit einer Abgasleitung ausgestattet sind, aufgeteilt. Die beiden Turbinen sind parallel geschaltet, wobei die erste Turbine des ersten Abgasturboladers in der Abgasleitung der ersten Zylindergruppe und die zweite Turbine des zweiten Abgasturboladers in der Abgasleitung der zweiten Zylindergruppe angeordnet wird. Damit sind die Turbinen parallel geschaltet. Die beiden Verdichter hingegen werden in Reihe geschaltet, wobei der erste Verdichter des ersten Abgasturboladers in der Gesamtansaugleitung, die zur Versorgung der Brennkraftmaschine mit Frischluft bzw. Frischgemisch dient, angeordnet wird und der zweite Verdichter des zweiten Abgasturboladers stromabwärts des ersten Verdichters in der Gesamtansaugleitung angeordnet wird. Es erfolgt eine zweistufige Verdichtung.

Die in dieser Weise angeordneten Abgasturbolader gestatten es, die parallel betriebenen Turbinen auf kleinere Abgasströme auszulegen und damit auf das Verdichterkennfeld in vorteilhafter Weise Einfluß zu nehmen. Das effektive Verdichterkennfeld wird aufgrund der Reihenschaltung d. h. der mehrstufigen Verdichtung aufgeweitet. Insbesondere wird ein Verschieben der Pumpgrenze zu kleineren Verdichterströmen hin möglich, wodurch auch bei kleinen Verdichterströmen hohe Ladedruckverhältnisse erzielt werden können, was im unteren Teillastbereich die Drehmomentcharakteristik deutlich verbessert.

Kleiner dimensionierte Abgasturbolader im allgemeinen und kleiner dimensionierte Verdichter bzw. Turbinen im besonderen bieten aber - wegen ihrer geringeren Masse und ihrem geringeren Massenträgheitsmoment - darüber hinaus noch weitere Vorteile.

Das Ansprechverhalten einer derartig aufgeladenen Brennkraftmaschine ist deutlich verbessert. Der Grund hierfür ist darin zu finden, daß kleinere Turbinen bzw. kleinere Verdichter weniger träge sind als größere Turbinen bzw. größere Verdichter, weil das Laufzeug sich schneller beschleunigen und verzögern läßt. Vor allem weist der zweite Abgasturbolader, dessen Verdichter aufgrund der Vorverdichtung der Verbrennungsluft kleiner ausgeführt werden kann, ein deutlich kleineres Massenträgheitsmoment auf.

Dieser Effekt hat auch hinsichtlich der Partikelemissionen Vorteile, da bei einer Beschleunigung die notwendige Zunahme der den Zylindern zugeführten Luftmasse der erhöhten Kraftstoffmenge infolge der Trägheit der Laufräder im allgemeinen nur verzögert erfolgt. Ein kleinerer, weniger träger Verdichter unterstützt somit Bestrebungen, die darauf ausgerichtet sind, das Ansprechverhalten der Luftzuführung dem Ansprechverhalten der Kraftstoffzuführung anzunähern bzw. anzupassen.

Kleiner dimensionierte Turbinen sind des weiteren aufgrund ihrer geringeren Masse thermisch weniger träge. Der heiße Abgasstrom muß auf dem Weg zu den Abgasnachbehandlungssystemen die Turbinen durchströmen und gibt dort insbesondere während der Warmlaufphase unter Absenkung der Abgastemperatur Wärme an die Turbinen ab, so daß die Erwärmung der Turbinen mit dazu beiträgt, daß die im Abgastrakt angeordneten Katalysatoren später ihre Anspringtemperatur bzw. Betriebstemperatur erreichen.

Die in Reihe geschalteten Verdichter sorgen im Rahmen einer zweistufigen Kompression für ausreichend hohe Ladedrücke, wobei der erste Verdichter die Niederdruckstufe und der zweite Verdichter die Hochdruckstufe bildet.

Wie bereits oben erwähnt, sind neben der Aufladung, die primär der Leistungssteigerung dient, weitere Maßnahmen erforderlich, um zukünftige Grenzwerte für Schadstoffemissionen einzuhalten. Dabei kommen nach dem Stand der Technik unterschiedliche Abgasnachbehandlungssysteme zum Einsatz, auf die im folgenden kurz eingegangen wird.

Nach dem Stand der Technik werden Brennkraftmaschinen zur Reduzierung der Schadstoffemissionen mit verschiedenen Abgasnachbehandlungssystemen ausgestattet. Zwar fmdet auch ohne zusätzliche Maßnahmen während der Expansion und des Ausschiebens der Zylinderfiillung bei einem ausreichenden hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen.

Aus diesem Grunde werden in der Regel Oxidationskatalysatoren eingesetzt, die unter Verwendung katalytischer Materialien die Geschwindigkeit bestimmter Reaktionen erhöhen und daher eine Oxidation von HC und CO auch bei niedrigen Temperaturen sicherstellen.

Oxidationskatalysatoren tragen insbesondere nach einem Kaltstart bzw. in der Warmlaufphase der Brennkraftmaschine maßgeblich zur Reduzierung der Emissionen an unverbrannten Kohlenwasserstoffen (HC) und von Kohlenmonoxid (CO) bei. Eine effektive Nachbehandlung des Abgases unter diesen Betriebsbedingungen erfordert aber eine möglichst nahe Anordnung des Katalysators an den Auslassöffnungen der Zylinder, damit die heißen Abgase direkt dem Katalysator zugeführt werden und nicht erst unter Wärmeabgabe durch den als Temperatursenke anzusehenden Abgastrakt geleitet werden. Auf diese Weise erreicht der Katalysator nach einem Kaltstart bzw. in der Warmlaufphase schneller seine Anspringtemperatur, die bei etwa 300°C liegt und dadurch gekennzeichnet ist, daß ein spürbarer Anstieg in der Konvertierung der Schadstoffe zu beobachten ist.

Die heißen Abgase sollen einen möglichst kurzen Weg zu den verschiedenen Abgasnachbehandlungssystemen zurücklegen müssen, damit diesen Abgasen wenig Zeit zur Abkühlung eingeräumt wird und die Abgasnachbehandlungssysteme möglichst schnell ihre Betriebstemperatur bzw. Anspringtemperatur erreichen. In diesem Zusammenhang ist man daher auch grundsätzlich bemüht, die thermische Trägheit des Teilstücks der Abgasleitung zwischen Auslaß und Abgasnachbehandlungssystem zu minimieren, was durch Reduzierung der Masse und der Länge dieses Teilstückes erreicht werden kann. Einer möglichst nahen Anordnung des Oxidationskatalysators am Auslaß der Zylinder, steht die Forderung entgegen, den bzw. die Abgasturbolader auch möglichst nahe am Auslaß der Brennkraftmaschine anzuordnen, um auf diese Weise die Abgasenthalpie der heißen Abgase optimal zu nutzen.

Die am Beispiel des Katalysators beschriebene Problematik stellt sich auf ähnliche Weise auch bei anderen Abgasnachbehandlungssystemen ein. Sowohl die für Dieselmotoren verwendeten Oxidationskatalysatoren als auch die bei Ottomotoren eingesetzten Drei-Wege-Katalysatoren benötigen eine bestimmte Betriebstemperatur, um die Schadstoffe in ausreichendem Maße zu konvertieren und die Schadstoffemissionen spürbar zu reduzieren.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei durch den Abgasgegendruck, der sich infolge des zunehmenden Strömungswiderstandes des Filters aufgrund der anwachsenden Partikelmasse im Filter einstellt, bestimmt.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muß auf zusätzliche Maßnahmen zurückgegriffen werden, um eine Regeneration des Filters unter allen Betriebsbedingungen zu gewährleisten.

Die Verbrennung der Partikel kann dabei durch eine Nacheinspritzung von zusätzlichem Kraftstoff in den Brennraum unterstützt bzw. initiiert werden, wobei der nacheingespritzte Kraftstoff bereits im Brennraum gezündet werden kann. Nachteilig an dieser Vorgehensweise sind insbesondere die im Abgastrakt auf dem Weg zum Filter zu befürchtenden Wärmeverluste und die damit verbundene Temperaturabsenkung der heißen Abgase. Aus diesem Grunde ergibt sich bei der Verwendung eines Partikelfilters ebenfalls die Forderung nach einer möglichst nahen Anordnung des Filters am Auslaß der Brennkraftmaschine.

Bei Brennkraftmaschinen, die mit einem Luftüberschuß betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d. h. aufgrund der fehlenden Reduktionsmittel - nicht reduziert werden. Zur Reduzierung der Stickoxide werden deshalb selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe direkt in den Abgastrakt eingebracht werden oder aber durch innermotorische Maßnahmen, nämlich durch eine Nacheinspritzung von zusätzlichem Kraftstoff in den Brennraum nach der eigentlichen Verbrennung, zugeführt werden. Dabei soll der nacheingespritzte Kraftstoff während des Ladungswechsels in den Abgastrakt eingeleitet werden.

Die vorstehenden Ausführungen machen deutlich, daß die aus dem Stand der Technik bekannten Aufladekonzepte weiter verbessert werden müssen, um in sämtlichen Drehzahlbereichen die gewünschte Leistungssteigerung ohne Einschränkungen zu ermöglichen. Des weiteren müssen Aufladekonzept bereitgestellt werden, die eine möglichst effektive Abgasnachbehandlung gestatten.

Vor diesem Hintergrund ist es die Aufgabe der vorliegenden Erfindung, eine aufgeladene Brennkraftmaschine gemäß dem Oberbegriff des Anspruchs 1 d.h. der gattungsbildenden Art bereitzustellen, mit der in sämtlichen Drehzahlbereichen die gewünschte Leistungssteigerung ermöglicht wird und die eine möglichst effektive Abgasnachbehandlung gestattet.

Eine weitere Teilaufgabe der vorliegenden Erfindung ist es, ein Verfahren zum Betreiben einer aufgeladenen Brennkraftmaschine der oben genannten Art aufzuzeigen.

Gelöst wird die erste Teilaufgabe durch eine aufgeladene Brennkraftmaschine mit mindestens zwei Zylindern, die in der Art konfiguriert sind, daß sie zwei Gruppen mit jeweils mindestens einem Zylinder bilden, wobei beide Zylindergruppen jeweils mit einer Abgasleitung ausgestattet sind, und mit zwei Abgasturboladern, deren Turbinen parallel geschaltet sind, indem eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist, und deren Verdichter in Reihe geschaltet sind, indem ein erster Verdichter des ersten Abgasturboladers in einer Gesamtansaugleitung, die zur Versorgung der Brennkraftmaschine mit Frischluft bzw. Frischgemisch dient, angeordnet ist und ein zweiter Verdichter des zweiten Abgasturboladers stromabwärts des ersten Verdichters in dieser Gesamtansaugleitung angeordnet ist, und die dadurch gekennzeichnet ist, daß
■ die Abgasleitungen der beiden Zylindergruppen stromaufwärts der beiden Turbinen mittels einer Verbindungsleitung miteinander verbunden sind, und
■ sowohl in der ersten Abgasleitung als auch in der zweiten Abgasleitung Mittel vorgesehen sind, mit denen die Größe der beiden durch die Turbinen geführten Abgasmassenströme steuerbar ist.

Die erfmdungsgemäße Brennkraftmaschine ist mit zwei parallel geschalteten, in zwei Abgasleitungen angeordneten Turbinen und zwei in Reihe geschalteten, in einer gemeinsamen Ansaugleitung angeordneten Verdichtern ausgestattet.

Erfindungsgemäß sind die Abgasleitungen der beiden Zylindergruppen stromaufwärts der beiden Turbinen mittels einer Verbindungsleitung miteinander verbunden, so daß der gesamte Abgasstrom abhängig vom momentanen Betriebspunkt der Brennkraftmaschine sowohl vollständig durch die erste Turbine als auch vollständig durch die zweite Turbine geleitet werden kann. Des weiteren ist eine beliebige den jeweiligen Betriebsbedingungen entsprechende Aufteilung der beiden Abgasströme bzw. des Gesamtabgasstromes auf die beiden Turbinen möglich. In Abhängigkeit von der jeweiligen Drehzahl und dem bei einer spezifischen Drehzahl vorhandenen Abgasmassenstrom wird der Gesamtabgasstrom auf die beiden Turbinen aufgeteilt, was weiter unten im Zusammenhang mit dem erfindungsgemäßen Verfahren zum Betreiben der aufgeladenen Brennkraftmaschine näher beschrieben werden wird. Zur Aufteilung des Gesamtabgasstromes sind sowohl in der ersten Abgasleitung als auch in der zweiten Abgasleitung Mittel vorgesehen, mit denen die Größe der beiden durch die Turbinen geführten Abgasmassenströme steuerbar ist.

Damit ermöglicht die erfindungsgemäße Brennkraftmaschine eine optimierte Aufladung in sämtlichen Drehzahlbereichen und damit eine signifikante Verbesserung der Aufladung der Brennkraftmaschine im Vergleich zu herkömmlichen, in der Beschreibungseinleitung erörterten Aufladekonzepten. Des weiteren ermöglicht die erfmdungsgemäße Brennkraftmaschine eine verbesserte Abgasnachbehandlung, was sich auch durch die Möglichkeit der beliebigen Aufteilung der heißen Abgase auf die beiden Turbinen ergibt und weiter unten, insbesondere im Zusammenhang mit der Beschreibung der Figuren, deutlich werden wird.

Damit wir durch die erfindungsgemäße Brennkraftmaschine die der Erfindung zugrunde liegende Aufgabe gelöst, nämlich eine Brennkraftmaschine der gattungsbildenden Art bereitzustellen, mit der in sämtlichen Drehzahlbereichen die gewünschte Leistungssteigerung ermöglicht wird und die eine möglichst effektive Abgasnachbehandlung gestattet.

Weitere vorteilhafte Ausführungsformen der Brennkraftmaschine werden im Zusammenhang mit den Unteransprüchen erörtert.

Vorteilhaft sind Ausführungsformen, bei denen der erste Verdichter größer ausgelegt ist als der zweite Verdichter, weil bei dieser Ausgestaltung der Brennkraftmaschine der erste Verdichter im Rahmen der zweistufigen Verdichtung die Niederdruckstufe bildet, wohingegen der zweite Verdichter die bereits vorverdichtete Luft komprimiert und somit die Hochdruckstufe darstellt.

Vorteilhaft sind insbesondere Ausführungsformen der Brennkraftmaschine, bei denen die erste Turbine größer ausgelegt ist als die zweite Turbine.

Bei niedrigen und mittleren Drehzahlen bzw. geringen Abgasmengen werden die in den Abgasleitungen vorgesehenen Mittel dann in der Art gesteuert, daß der wesentliche Anteil des Abgases durch die zweite, kleinere Turbine geleitet wird. Dies ermöglicht die Auslegung der zweiten Turbine auf kleine Abgasmengen bzw. kleine Abgasströme und somit eine Optimierung der Aufladung im unteren Drehzahlbereich. Dabei sollte der Abgasstrom durch die erste, große Turbine vorzugsweise nie ganz unterbunden werden, da die Laufräder der Turbine mit Gleitlagern ausgestattet sind und eine gewisse Drehzahl erforderlich ist, damit der hydrodynamische Schmierölfilm des Gleitlagers aufgebaut und aufrechterhalten wird. Auf diese Weise wird unter allen Betriebsbedingungen eine Flüssigkeitsreibung im Gleitlager sichergestellt, was günstig hinsichtlich des Verschleißes und der Lebensdauer bzw. der Funktionstüchtigkeit der Turbine ist.

Bei hohen Drehzahlen bzw. großen Abgasmengen werden die in den Abgasleitungen vorgesehenen Mittel dann in der Art gesteuert, daß der wesentliche Anteil des Abgases durch die erste, größere Turbine geleitet wird. Dies ermöglicht die Auslegung der ersten Turbine auf hohe Abgasmengen bzw. große Abgasströme und somit eine Optimierung der Aufladung im oberen Drehzahlbereich. Dabei sollte - aus den oben bereits genannten Gründen - der Abgasstrom durch die zweite, kleine Turbine vorzugsweise nie ganz unterbunden werden.

Vorteilhaft sind Ausführungsformen der Brennkraftmaschine, bei denen das Mittel zur Steuerung des Abgasmassenstroms in der ersten Abgasleitung und/oder das Mittel zur Steuerung des Abgasmassenstroms in der zweiten Abgasleitung ein Absperrelement, vorzugsweise ein Ventil, ist.

Mit Hilfe des Absperrelementes wird der Strömungsquerschnitt der ersten Abgasleitung und/oder der zweiten Abgasleitung, vorzugsweise stufenlos, verändert, wobei eine Verkleinerung des Strömungsquerschnittes der Abgasleitung zu einer Verkleinerung des Abgasmassenstromes durch die entsprechende Turbine führt. Die Vergrößerung des Strömungsquerschnittes hingegen gibt den Weg durch die entsprechende Turbine frei und erhöht den durch diese Turbine geleiteten Abgasmassenstrom. Für eine stufenlose Verstellung der Strömungsquerschnitte eignen sich insbesondere Turbinen mit variabler Geometrie als Mittel zur Steuerung der Abgasmassenströme.

Es sind aber auch Ausführungsformen der Brennkraftmaschine für die Praxis relevant, bei denen die erste oder zweite Abgasleitung mit den Absperrelementen entweder vollständig geschlossen oder vollständig geöffnet wird. Damit läßt sich die erfindungsgemäße Brennkraftmaschine gewissermaßen zwischen zwei Konfiguration hin und her schalten. Dabei wird entweder der gesamte Abgasstrom durch die erste, große Turbine oder aber durch die zweite, kleine Turbine geleitet. Bei geeigneter Auslegung der Aufladung kann so der für die Bestimmung der Schadstoffemissionen gesetzlich vorgeschriebene Test ohne Umschalten absolviert werden, wobei der gesamte Abgasstrom durch die zweite, kleine Turbine geführt wird.

Wird als Absperrelement eine Drosselklappe verwendet, können auch bei vollständig geschlossener Drosselklappe Leckageströme nie ganz vermieden werden kann, so daß die Turbinen unter sämtlichen Betriebsbedingungen zumindest von einem kleinen Abgasstrom durchströmt werden.

Vorteilhaft sind Ausführungsformen der Brennkraftmaschine, bei denen das Absperrelement elektrisch, hydraulisch, pneumatisch, mechanisch oder magnetisch steuerbar ist, vorzugsweise mittels Motorsteuerung.

Vorteilhaft sind Ausführungsformen der Brennkraftmaschine, bei denen das Absperrelement zur Steuerung des Abgasmassenstroms stromaufwärts der Turbine in der Abgasleitung angeordnet ist, so daß die Einstellung des Abgasmassenstromes vor d.h. stromaufwärts der Turbine erfolgt.

Vorteilhaft sind Ausführungsformen der Brennkraftmaschine, bei denen die erste Turbine eine variable Turbinengeometrie aufweist. Eine variable Turbinengeometrie erhöht die Flexibilität der Aufladung. Sie gestattet eine stufenlose Anpassung der Turbinengeometrie an den jeweiligen Betriebspunkt der Brennkraftmaschine bzw. an den Abgasmassenstrom. Im Gegensatz zu einer Turbine mit fester Geometrie muß kein Kompromiß bei der Auslegung der Turbine eingegangen werden, um in sämtlichen Drehzahlbereichen eine mehr oder weniger zufriedenstellende Aufladung zu realisieren. Insbesondere kann auf die energetisch nachteilige Ladeluftabblasung, aber auch auf eine Abgasabblasung, wie sie bei Waste-Gate-Turbinen vorgenommen wird, verzichtet werden.

Vorteilhaft sind Ausführungsformen der Brennkraftmaschine, bei denen die erste Turbine das Mittel zur Steuerung des Abgasmassenstroms in der ersten Abgasleitung bildet, wobei durch Verstellen der Turbine in Richtung Querschnittsverkleinerung eine Verkleinerung des durch die erste Turbine geführten Abgasmassenstroms realisierbar ist. Die veränderbare Geometrie wird bei dieser Ausführungsform genutzt, um den Strömungswiderstand der Turbine zu erhöhen und den durch die erste Turbine strömenden Abgasmassenstrom zu steuern. Wie oben bereits erwähnt eignet sich eine Turbine mit variabler Geometrie insbesondere für eine stufenlose Verstellung der Strömungsquerschnitte der Abgasleitung.

Zusätzliche Bauteile, insbesondere ein separates Absperrelement, sind dann nicht zwingend erforderlich, wenn die ohnehin bereits vorhandene Turbine des ersten Abgasturboladers zur Steuerung der Abgasmenge genutzt wird. Mit dem separaten Absperrelement entfallen auch eine separate Steuerung dieses Elementes und die dazu erforderliche Steuereinheit.

Vorteilhaft sind aber auch Ausführungsformen der Brennkraftmaschine, bei denen die erste Turbine eine feste, nicht veränderbare Turbinengeometrie aufweist. Im Gegensatz zu der zuvor beschriebenen Turbine mit variabler Geometrie (VTG) entfällt hier prinzipbedingt eine Steuerung. Im ganzen weist diese Ausführungsform daher insbesondere Kostenvorteile auf. Der Abgasstrom durch die erste Turbine wird bei dieser Ausführungsform mittels eines in der ersten Abgasleitung vorgesehenen Absperrelementes gesteuert.

Grundsätzlich kann die erste Turbine auch als Waste-Gate-Turbine ausgeführt werden, was aus energetischen Gründen aber nicht die bevorzugte Ausführungsform der erfindungsgemäßen Brennkraftmaschine darstellt. Sogenannte Waste-Gate-Turbinen verfügen zum Zwecke einer Abgasabblasung über eine die Turbine überbrückende Bypaßleitung. Eine derartige Turbine kann daher gezielt auf kleine Abgasströme ausgelegt werden, was die Qualität der Aufladung bei niedrigen Drehzahlen verbessert. Mit zunehmendem Abgasstrom wird ein größerer Anteil des Abgases über die Bypaßleitung an der Turbine vorbei geführt. Zur Steuerung der Abgasabblasung ist ein Absperrelement in der Bypaßleitung vorgesehen. Eine Waste-Gate-Turbine ist kostengünstiger als eine Turbine mit variabler Geometrie. Zudem ist die Steuerung einfacher und daher ebenfalls kostengünstiger als bei einer variablen Turbinengeometrie.

Vorteilhaft sind Ausführungsformen der Brennkraftmaschine, bei denen der erste Verdichter eine variable Verdichtergeometrie aufweist. Wie bereits im Zusammenhang mit der VTG-Turbine ausgeführt, erhöht eine variable Geometrie die Qualität und Flexibilität der Aufladung aufgrund der Möglichkeit einer stufenlosen Anpassung der Geometrie an den jeweiligen Betriebspunkt der Brennkraftmaschine.

Insbesondere, wenn nur ein sehr geringer Abgasmassenstrom durch die erste Turbine geleitet wird, erweist sich eine variable Verdichtergeometrie (VVG) als vorteilhaft, da durch Verstellen der Schaufeln die Pumpgrenze des Verdichters im Verdichterkennfeld hin zu kleinen Verdichterströmen verschoben werden kann und so ein Arbeiten des Verdichters jenseits der Pumpgrenze vermieden wird.

Vorteile bietet die veränderbare Verdichtergeometrie des ersten Verdichters aber insbesondere in den Betriebszuständen, in denen das Abgas überwiegend bzw. vollständig die zweite, kleinere Turbine durchströmt und daher der zweite, kleinere Verdichter nahezu alleine bzw. vollständig den notwendigen Ladedruck generiert. In diesen Fällen stellt der erste Verdichter lediglich einen Strömungswiderstand für die vom zweiten Verdichter angesaugte Frischluft dar. Eine variable Verdichtergeometrie gestattet dann die Entdrosselung der Ansaugleitung durch Vergrößerung des Strömungsquerschnittes des ersten Verdichters.

Diese Ausführungsform ist insbesondere dann vorteilhaft, wenn die Turbine des ersten Abgasturboladers über eine variable Turbinengeometrie verfügt und die Verdichtergeometrie auf die Turbinengeometrie kontinuierlich abgestimmt wird.

Vorteilhaft sind aber auch Ausführungsformen der Brennkraftmaschine, bei denen der erste Verdichter eine feste, nicht veränderbare Verdichtergeometrie aufweist. Verdichter mit fester Geometrie weisen aus denselben Gründen wie Turbinen mit fester Geometrie, nämlich aufgrund der einfacheren Bauweise, Kostenvorteile auf.

Vorteilhaft sind Ausführungsformen der Brennkraftmaschine, bei denen eine erste Bypaßleitung vorgesehen ist, die stromabwärts des ersten Verdichters und stromaufwärts des zweiten Verdichters in die Gesamtansaugleitung mündet. Diese Bypaßleitung kann stromaufwärts des ersten Verdichters aus der Gesamtansaugleitung abzweigen.

Diese Ausführungsform ist insbesondere bei niedrigen Drehzahlen bzw. geringen Abgasmengen vorteilhaft, wenn der wesentliche Anteil des Abgases durch die zweite, kleinere Turbine geleitet wird. Unter diesen Betriebsbedingungen arbeitet der erste, größere Verdichter kaum bzw. gar nicht, so daß der zweite Verdichter die Frischluft durch den ersten Verdichter hindurch fördern d. h. ansaugen muß, was energetisch nachteilig ist, da der erste Verdichter einen Strömungswiderstand bzw. eine Drosselstelle für die angesaugte Frischluft auf dem Weg zum zweiten Verdichter darstellt. Dabei sinkt der Druck in der angesaugten Luft. Zudem zieht der zweite Verdichter beim Ansaugen der Frischluft Öl aus dem ersten Verdichter, was insbesondere im Hinblick auf die Schadstoffemissionen, den Ölverbrauch und eine Ansaugsystemverschmutzung nachteilig ist und vermieden werden sollte.

Mittels der in Rede stehenden vorteilhaften Ausführungsform kann dies vermieden werden, indem der zweite Verdichter über die erste Bypaßleitung Frischluft bei Umgehung des ersten Verdichters aus der Umgebung ansaugen kann. Dabei ist in dieser Bypaßleitung vorzugsweise ein Absperrelement vorgesehen, mit dem die Verbindung zur Umgebung unterbrochen werden kann.

Vorteilhaft sind in diesem Zusammenhang Ausführungsformen der Brennkraftmaschine, bei denen zwischen den beiden Verdichtern ein Absperrelement in der Gesamtansaugleitung vorgesehen ist. Das Absperrelement dient dazu, den Frischluftstrom durch den ersten Verdichter vollständig zu unterbinden, während der zweite Verdichter Frischluft über die Bypaßleitung aus der Umgebung ansaugt.

Vorteilhaft sind Ausführungsformen der Brennkraftmaschine, bei denen stromabwärts der Verdichter ein Ladeluftkühler in der Gesamtansaugleitung angeordnet ist. Der Ladeluftkühler senkt die Lufttemperatur und steigert damit die Dichte der Luft, wodurch auch der Kühler zu einer besseren Füllung des Brennraums mit Luft d. h. zu einer größeren Luftmasse beiträgt.

Vorteilhaft sind Ausführungsformen der Brennkraftmaschine, bei denen zwischen den Verdichtern ein zweiter Ladeluftkühler in der Gesamtansaugleitung angeordnet ist. Die im ersten Verdichter vorverdichtete Verbrennungsluft, die sich im Rahmen der Vorverdichtung erwärmt, wird auf diese Weise vor Eintritt in den zweiten Verdichter heruntergekühlt, was zu einer verbesserten Zylinderfiillung beiträgt und damit die Qualität der Aufladung weiter verbessert. Dieser Zwischenkühler schützt den zweiten Verdichter des weiteren vor einer thermischen Überlastung.

Im folgenden werden die bevorzugten Bauweisen der Turbine und des Verdichters des zweiten Abgasturboladers aufgeführt. Die Vorteile der einzelnen Bauweisen, nämlich der variablen Geometrie, der festen Geometrie sowie der Waste-Gate-Bauweise wurden bereits ausführlich im Zusammenhang mit dem ersten Abgasturbolader bzw. der ersten Turbine und dem ersten Verdichter erörtert, weshalb an dieser Stelle auf die entsprechenden Ausführungen Bezug genommen wird, um Wiederholungen zu vermeiden.

Vorteilhaft sind Ausführungsformen der Brennkraftmaschine, bei denen die zweite Turbine eine variable Turbinengeometrie aufweist. Dadurch wird insbesondere die Qualität und Flexibilität der Aufladung erhöht. Die Geometrie kann dem Abgasmassenstrom durch Verstellen der Laufradschaufeln angepaßt werden.

Vorteilhaft sind Ausführungsformen der Brennkraftmaschine, bei denen die zweite Turbine das Mittel zur Steuerung des Abgasmassenstroms in der zweiten Abgasleitung bildet, wobei durch Verstellen der Turbine in Richtung Querschnittsverkleinerung eine Verkleinerung des durch die zweite Turbine geführten Abgasmassenstroms realisierbar ist.

Vorteilhaft sind Ausführungsformen der Brennkraftmaschine, bei denen die zweite Turbine eine feste, nicht veränderbare Turbinengeometrie aufweist. Hierdurch wird ein kostengünstiges Aufladekonzept ermöglicht.

Auch die zweite Turbine kann grundsätzlich als Waste-Gate-Turbine ausgeführt werden.

Vorteilhaft sind Ausführungsformen der Brennkraftmaschine, bei denen der zweite Verdichter eine variable Verdichtergeometrie aufweist. Wie oben bereits erwähnt bietet die variable Geometrie insbesondere Vorteile im Hinblick auf die Pumpgrenze des Verdichters durch Verschieben dieser Pumpgrenze. Es können auch bei einem kleinen Frischluftmassenstrom hohe Ladedrücke generiert werden. In Fällen, in denen die zweite Turbine keine oder nahezu keine Leistung zur Verdichtung bereitstellt, stellt der zweite Verdichter für die vom ersten Verdichter angesaugte und komprimierte Frischluft einen Strömungswiderstand auf dem Weg zu den Zylindern der Brennkraftmaschine dar. Eine variable Verdichtergeometrie gestattet durch Vergrößerung des Strömungsquerschnittes eine Entdrosselung der Ansaugleitung.

Vorteilhaft sind auch Ausführungsformen der Brennkraftmaschine, bei denen der zweite Verdichter eine feste, nicht veränderbare Verdichtergeometrie aufweist. Kostenvorteile und die Vereinfachung der Motorsteuerung der gesamten Brennkraftmaschine stehen dabei im Vordergrund.

Vorteilhaft sind Ausführungsformen der Brennkraftmaschine, bei denen der zweite Verdichter mit einer zweiten Bypaßleitung ausgestattet ist, die stromaufwärts des zweiten Verdichters aus der Gesamtansaugleitung abzweigt und stromabwärts des zweiten Verdichters wieder in die Gesamtansaugleitung einmündet. Zur Steuerung der am zweiten Verdichter vorbeigeführten Frischluftmenge kann ein Absperrelement in der zweiten Bypaßleitung vorgesehen.

Diese Ausführungsform ist insbesondere bei hohen Drehzahlen bzw. großen Abgasmengen vorteilhaft, wenn der wesentliche Anteil des Abgases durch die erste, größere Turbine geleitet wird. Unter diesen Betriebsbedingungen arbeitet der zweite, kleinere Verdichter kaum bzw. gar nicht, so daß der erste Verdichter die Frischluft durch den zweiten Verdichter hindurch fördern muß, was energetisch nachteilig ist, da der zweite Verdichter einen Strömungswiderstand für die im ersten Verdichter komprimierte Frischluft auf dem Weg zu den Zylindern darstellt. Dabei sinkt der mittels des ersten Verdichters generierte Ladedruck zwangsläufig.

Mittels der in Rede stehenden vorteilhaften Ausführungsform kann dies vermieden werden, indem durch Öffnen des Absperrelements die zweite Bypaßleitung geöffnet wird und der erste Verdichter bei Umgehung des zweiten Verdichters am zweiten Verdichter vorbei fördert. Zwar kann ein Teil der Frischluft in den zweiten Verdichter hineingelangen bzw. hineingefördert werden. In der Regel nimmt die Frischluftströmung aber die Leitung mit dem geringsten Strömungswiderstand, die bei voll geöffnetem Absperrelement von der Bypaßleitung gebildet wird.

Aus diesem Grund sind aber Ausführungsformen der Brennkraftmaschine besonders vorteilhaft, bei denen stromaufwärts des zweiten Verdichters vor der Abzweigung der zweiten Bypaßleitung ein Absperrelement in der Gesamtansaugleitung vorgesehen ist. Dadurch wird die aus dem ersten Verdichter kommende Frischluftströmung bei geschlossenem Absperrelement zwangsweise in die Bypaßleitung gelenkt und eine Förderung in den zweiten Verdichter vollständig unterbunden.

Vorteilhaft sind in diesem Zusammenhang des weiteren Ausführungsformen der Brennkraftmaschine, bei denen stromabwärts des zweiten Verdichters vor der Einmündung der zweiten Bypaßleitung in die Gesamtansaugleitung ein Absperrelement in der Gesamtansaugleitung vorgesehen ist, um durch ein Schließen dieses Absperrelements eine Rückströmung der Ladeluft in den zweiten Verdichter zu vermeiden.

An dieser Stelle sei angemerkt, daß die zweite Bypaßleitung zusammen mit dem Absperrelement, das stromaufwärts des zweiten Verdichters vor der Abzweigung der zweiten Bypaßleitung au der Gesamtansaugleitung vorgesehen ist, ebenfalls dazu verwendet werden kann, die beiden Verdichter parallel zu betreiben, wobei der zweite Verdichter dann über die erste Bypaßleitung Frischluft aus der Umgebung ansaugt.

Vorteilhaft sind Ausführungsformen der Brennkraftmaschine, bei denen die beiden Abgasleitungen stromabwärts der beiden Turbinen in eine Gesamtabgasleitung münden. Durch diese Maßnahme können die beiden Abgasströme der beiden Abgasleitungen d. h. der Gesamtabgasstrom mittels eines einzigen Abgasnachbehandlungssystems einer Art nachbehandelt werden, ohne daß es erforderlich wäre, in beiden Abgasleitungen jeweils Systeme für die entsprechende Abgasnachbehandlung vorzusehen. Die Anzahl der erforderlichen Abgasnachbehandlungssysteme kann dadurch halbiert werden. Vorteile bietet diese Ausführungsform auch hinsichtlich des Packaging.

Vorteilhaft sind daher Ausführungsformen der Brennkraftmaschine, bei denen in der Gesamtabgasleitung mindestens ein Abgasnachbehandlungssystem vorgesehen ist. Dabei ist das mindestens eine Abgasnachbehandlungssystem vorzugsweise ein Partikelfilter.

Vorteilhaft sind Ausführungsformen der Brennkraftmaschine, bei denen in der zweiten Abgasleitung stromabwärts der zweiten Turbine mindestens ein Abgasnachbehandlungssystem vorgesehen ist. Dabei ist das mindestens eine Abgasnachbehandlungssystem vorzugsweise ein Oxidationskatalysator. Die Gründe sind die folgenden

Bei niedrigen und mittleren Drehzahlen bzw. geringen Abgasmengen werden die in den Abgasleitungen vorgesehenen Mittel in der Art gesteuert, daß der wesentliche Anteil des Abgases durch die zweite, kleinere Turbine geleitet wird und den in der zweiten Abgasleitung stromabwärts der zweiten Turbine angeordneten Oxidationskatalysator durchströmt. Dieser in der zweiten Abgasleitung angeordnete Oxidationskatalysator zeichnet sich durch seine vergleichsweise nahe Anordnung an den Auslaßöffnungen der Brennkraftmaschine aus. Der Katalysator erreicht dadurch schneller seine Betriebstemperatur bzw. Anspringtemperatur.

Unterstützt wird dieser Effekt durch die Tatsache, daß die thermische Trägheit der zweiten Abgasleitung zwischen Auslaß und Katalysator klein ist, was unter anderem durch die kleine Masse der zweiten Turbine, die vorzugsweise auf geringe Abgasmassenströme ausgelegt ist, bedingt ist. Aus diesem Grunde weist die in Rede stehende Ausführungsform insbesondere beim Kaltstart bzw. in der Warmlaufphase erhebliche Vorteile gegenüber konventionellen Brennkraftmaschinen auf.

Wird bei niedrigen und mittleren Drehzahlen bzw. geringen Abgasmengen der Abgasmassenstrom nahezu vollständig durch die zweite Turbine geleitet und ein Abgasmassenstrom durch die erste Turbine unterbunden, kann zudem auf einen zusätzlichen Oxidationskatalysator in der ersten Abgasleitung stromabwärts der ersten Turbine verzichtet werden.

Ein zweiter Oxidationskatalysator kann aber stromabwärts der Turbinen in der Gesamtabgasleitung und dann vorzugsweise vor einem in der Gesamtabgasleitung angeordneten Partikelfilter vorgesehen werden.

Bei hohen Drehzahlen bzw. großen Abgasmengen werden die in den Abgasleitungen vorgesehenen Mittel in der Art gesteuert, daß der wesentliche Anteil des Abgases durch die erste, größere Turbine geleitet wird. Die Oxidation der unverbrannten Kohlenwasserstoffe (HC) und von Kohlenmonoxid (CO) erfolgt dann in dem zweiten Oxidationskatalysator, der sich durch seine nahe Anordnung zum in der Gesamtabgasleitung angeordneten Partikelfilter auszeichnet. Die Oxidation und die mit ihr verbundene Wärmeerzeugung infolge der ablaufenden exothermen Reaktionen fmden dabei in unmittelbarer Nähe zum Partikelfilter statt, was die Durchführung einer Filterregeneration auf vorteilhafte Weise unterstützen kann.

Der stromabwärts der zweiten Turbine in der zweiten Abgasleitung angeordnete Katalysator wird in diesem Fall durch die reduzierte Durchströmung vor Überhitzung geschützt.

Die zweite der Erfindung zugrunde liegende Teilaufgabe wird gelöst durch ein Verfahren zum Betreiben einer aufgeladenen Brennkraftmaschine, das dadurch gekennzeichnet ist, daß
■ die erste Turbine größer ausgelegt wird als die zweite Turbine,
■ der erste Verdichters größer ausgelegt wird als der zweite Verdichter, und
■ bei niedrigen Drehzahlen bzw. kleinen Abgasmengen die in der ersten Abgasleitung und in der zweiten Abgasleitung vorgesehenen Mittel in der Art gesteuert werden, daß der wesentliche Anteil des Abgases durch die zweite Turbine geführt wird d. h. der durch die zweite Turbine geleitete Abgasmassenstrom größer ist als der durch die erste Turbine geleitete Abgasmassenstrom, und
■ bei hohen Drehzahlen bzw. großen Abgasmengen die in der ersten Abgasleitung und in der zweiten Abgasleitung vorgesehenen Mittel in der Art gesteuert werden, daß der wesentliche Anteil des Abgases durch die erste Turbine geführt wird d.h. der durch die erste Turbine geleitete Abgasmassenstrom größer ist als der durch die zweite Turbine geleitete Abgasmassenstrom.

Das im Zusammenhang mit der erfindungsgemäßen Brennkraftmaschine Gesagte gilt ebenfalls für das erfindungsgemäße Verfahren. Durch die Auslegung der Abgasturbolader in der beschriebenen Weise und die Steuerung der Abgasströme in Abhängigkeit von der Drehzahl bzw. in Abhängigkeit von der Menge an heißen Abgasen ist es möglich, eine optimierte Aufladung unter sämtlichen Betriebsbedingungen der Brennkraftmaschine zu realisieren.

Obwohl die beiden Turbinen in den zwei Abgasleitungen symmetrisch angeordnet sind, werden sie unterschiedlich ausgelegt, um im gesamten Motorkennfeld eine optimierte Aufladung zu gewährleisten. Während die zweite Turbine im Hinblick auf kleine Abgasmassenströme ausgelegt wird, erfolgt die Auslegung der ersten Turbine auf größere Abgasmassenströme.

Vorteilhaft sind Ausführungsformen des Verfahrens, bei denen
■ in der zweiten Abgasleitung stromabwärts der zweiten Turbine ein Oxidationskatalysator vorgesehen wird, und
■ nach einem Kaltstart bzw. in der Warmlaufphase die in der ersten Abgasleitung und in der zweiten Abgasleitung vorgesehenen Mittel in der Art gesteuert werden, daß der wesentliche Anteil des Abgases durch die zweite Turbine geführt wird d. h. der durch die zweite Turbine geleitete Abgasmassenstrom größer ist als der durch die erste Turbine geleitete Abgasmassenstrom.

Vorteilhaft sind Ausführungsformen des Verfahrens, bei denen eine erste Bypaßleitung vorgesehen wird, die stromabwärts des ersten Verdichters und stromaufwärts des zweiten Verdichters in die Gesamtansaugleitung mündet und mit der der zweite Verdichter bei niedrigen Drehzahlen bzw. einer kleinen Abgasmenge mit der Umgebung verbunden wird, wobei in der Bypaßleitung zum Öffnen und Schließen dieser Leitung ein Absperrelement vorgesehen wird.

Vorteilhaft sind dabei Ausführungsformen des Verfahrens, bei denen zwischen den beiden Verdichtern ein Absperrelement in der Gesamtansaugleitung vorgesehen wird, das geschlossen wird, wenn der zweite Verdichter mittels der Bypaßleitung mit der Umgebung verbunden wird.

Wie bereits oben ausgeführt, kann dadurch vermieden werden, daß der zweite Verdichter bei kleinen Drehzahlen bzw. kleinen Abgasmassenströmen, wenn der erste Verdichter nicht oder kaum fördert, die Frischluft durch den ersten Verdichter hindurch ansaugen muß.

Vorteilhaft sind Ausführungsformen des Verfahrens, bei denen der zweite Verdichter mit einer zweiten Bypaßleitung ausgestattet wird, die stromaufwärts des zweiten Verdichters aus der Gesamtansaugleitung abzweigt und stromabwärts des zweiten Verdichters in die Gesamtansaugleitung einmündet, wobei in dieser zweiten Bypaßleitung ein Absperrelement vorgesehen wird, das bei hohen Drehzahlen bzw. großen Abgasmengen vollständig geöffnet wird.

Vorteilhaft sind dabei Ausführungsformen des Verfahrens, bei denen stromaufwärts des zweiten Verdichters stromab der Abzweigung der zweiten Bypaßleitung ein Absperrelement in der Gesamtansaugleitung vorgesehen wird, das bei hohen Drehzahlen bzw. großen Abgasmengen vollständig geschlossen wird.

Die beiden zuletzt genannten Verfahrensvarianten ermöglichen eine Umgehung des zweiten Verdichters, was Vorteile aufweist, wenn bei hohen Drehzahlen bzw. großen Abgasströmen der zweite Verdichter nicht oder kaum fördert und im Hinblick auf die aus dem ersten Verdichter kommende Frischluft lediglich einen Strömungswiderstand darstellt.

Vorteilhaft sind Ausführungsformen des Verfahrens, bei denen die erste Turbine mit einer variablen Turbinengeometrie ausgestattet wird und bei niedrigen Drehzahlen bzw. kleinen Abgasmengen durch Verstellen der variablen Turbinengeometrie der Turbinenquerschnitt der ersten Turbine reduziert wird.

Dadurch wird der Strömungswiderstand der ersten Turbine erhöht, wodurch der wesentliche Anteil der heißen Abgase durch die zweite, kleinere Turbine geführt wird, die auf diese kleinen Abgasmassenströme ausgelegt ist und daher unter diesen Betriebsbedingungen hohe Ladedrücke generieren kann.

Vorteilhaft sind Ausführungsformen des Verfahrens, bei denen die zweite Turbine mit einer variablen Turbinengeometrie ausgestattet wird und bei hohen Drehzahlen bzw. großen Abgasmengen durch Verstellen der variablen Turbinengeometrie der Turbinenquerschnitt der zweiten Turbine reduziert wird.

Dadurch wird der Strömungswiderstand der zweiten Turbine erhöht, weshalb der wesentliche Anteil der heißen Abgase durch die erste, größere Turbine geführt wird, die auf diese großen Abgasmassenströme ausgelegt ist und daher unter diesen Betriebsbedingungen hohe Ladedrücke generieren kann.

Vorteilhaft sind Ausführungsformen des Verfahrens, bei denen als Mittel zur Steuerung des Abgasmassenstroms in der ersten Abgasleitung und/oder als Mittel zur Steuerung des Abgasmassenstroms in der zweiten Abgasleitung ein Absperrelement, vorzugsweise ein Ventil, verwendet wird, welches
■ bei niedrigen Drehzahlen bzw. kleinen Abgasmengen in der Art gesteuert werden, daß der wesentliche Anteil des Abgases durch die zweite Turbine geführt wird d. h. der durch die zweite Turbine geleitete Abgasmassenstrom größer ist als der durch die erste Turbine geleitete Abgasmassenstrom, und
■ bei hohen Drehzahlen bzw. großen Abgasmengen in der Art gesteuert werden, daß der wesentliche Anteil des Abgases durch die erste Turbine geführt wird d. h. der durch die erste Turbine geleitete Abgasmassenstrom größer ist als der durch die zweite Turbine geleitete Abgasmassenstrom

Im folgenden wird die Erfindung anhand von sieben Ausführungsbeispielen gemäß den Figuren 1 bis 7 näher beschrieben. Hierbei zeigt:
- Fig. 1: schematisch eine erste Ausführungsform der Brennkraftmaschine,
- Fig. 2: schematisch eine zweite Ausführungsform der Brennkraftmaschine,
- Fig. 3: schematisch eine dritte Ausführungsform der Brennkraftmaschine,
- Fig. 4: schematisch eine vierte Ausführungsform der Brennkraftmaschine,
- Fig. 5: schematisch eine fünfte Ausführungsform der Brennkraftmaschine,
- Fig. 6: schematisch eine sechste Ausführungsform der Brennkraftmaschine, und
- Fig. 7: schematisch eine siebte Ausführungsform der Brennkraftmaschine.

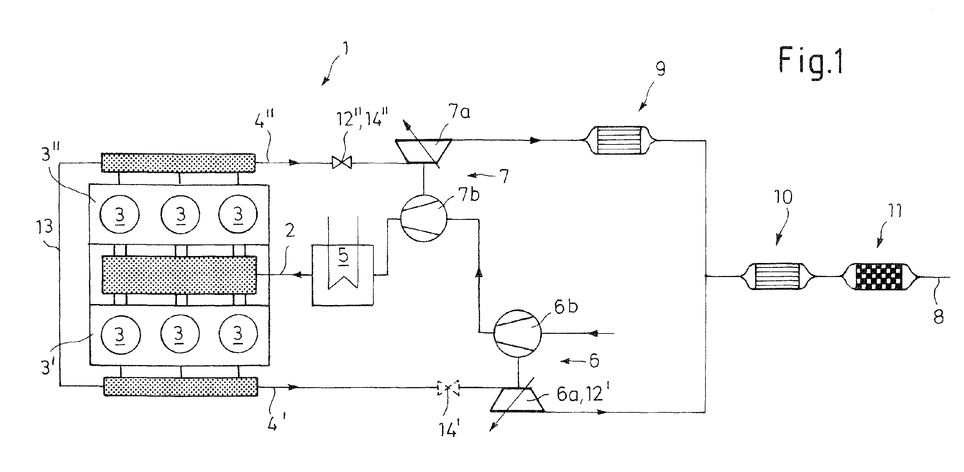

Figur 1 zeigt eine erste Ausführungsform einer aufgeladenen Brennkraftmaschine 1 am Beispiel eines Sechs-Zylinder-V-Motors. Die Zylinder 3 der Brennkraftmaschine 1 sind in zwei Zylindergruppen 3', 3" aufgeteilt, die jeweils über eine Abgasleitung 4', 4" verfügen, wobei eine Verbindungsleitung 13 vorgesehen ist, durch die die beiden Abgasleitungen 4', 4" miteinander in Verbindung stehen.

Es sind zwei Abgasturbolader 6, 7 vorgesehen, wobei die erste Turbine 6a des ersten Abgasturboladers 6 in der ersten Abgasleitung 4' der ersten Zylindergruppe 3' und die zweite Turbine 7a des zweiten Abgasturboladers 7 in der zweiten Abgasleitung 4" der zweiten Zylindergruppe 3" angeordnet ist.

Die diesen beiden Turbinen 6a, 7a zugeordneten Verdichter 6b, 7b sind in einer gemeinsamen Gesamtansaugleitung 2 angeordnet, wobei der zweite Verdichter 7b des zweiten Abgasturboladers 7 stromabwärts des ersten Verdichters 6b des ersten Abgasturboladers angeordnet ist. Damit verfügt die Brennkraftmaschine 1 über zwei parallel geschaltete bzw. angeordnete Turbinen 6a, 7a und über zwei in Reihe geschaltete bzw. angeordnete Verdichter 6b, 7b.

Der erste Verdichter 6b ist größer ausgelegt als der zweite Verdichter 7b, weil der erste Verdichter 6b die Niederdruckstufe der zweistufigen Verdichtung bildet, wohingegen der zweite Verdichter 7b die bereits vorverdichtete Luft komprimiert und somit die kleiner auszulegende Hochdruckstufe bildet.

Stromabwärts der Verdichter 6b, 7b ist ein Ladeluftkühler 5 in der Gesamtansaugleitung 2, die zur Versorgung der Brennkraftmaschine 1 mit Frischluft bzw. Frischgemisch dient, angeordnet. Der Ladeluftkühler 5 senkt die Lufttemperatur und steigert damit die Dichte der Luft, wodurch er zu einer besseren Füllung der Zylinder 3 mit Luft beiträgt.

Bei der in der Figur 1 dargestellten Ausführungsform verfügt sowohl die Turbine 6a des ersten Abgasturboladers 6 als auch die Turbine 7a des zweiten Abgasturboladers 7 über eine variable Turbinengeometrie (VTG - kenntlich gemacht durch den Pfeil), die durch Verstellen der Turbinenschaufeln eine stufenlose Anpassung der Turbinengeometrie an den jeweiligen Betriebspunkt der Brennkraftmaschine 1 ermöglicht. Dadurch wird insbesondere die Qualität und Flexibilität der Aufladung erhöht. Die Geometrie der Turbine 6a, 7a kann dem momentanen Abgasmassenstrom durch Verstellen der Laufradschaufeln angepaßt werden.

Die Verdichter 6b, 7b können eine feste Geometrie aufweisen oder ebenfalls mit einer variablen Geometrie ausgeführt sein. Eine variable Geometrie ist vorteilhaft, wenn die entsprechende Turbine 6a, 7a über eine variable Turbinengeometrie verfügt und die Verdichtergeometrie auf die Turbinengeometrie kontinuierlich abgestimmt wird.

Insbesondere bei kleinen Abgasmassenströmen durch die Turbine 6a, 7a und den damit verbundenen kleinen Verdichtermassenströmen erweist sich eine variable Verdichtergeometrie (WG) als vorteilhaft, da durch Verstellen der Schaufeln die Pumpgrenze des Verdichters 6b, 7b im Verdichterkennfeld hin zu kleinen Verdichterströmen verschoben werden kann und so ein Arbeiten des Verdichters 6b, 7b jenseits der Pumpgrenze vermieden wird. Grundsätzlich können die Verdichter 6b, 7b auch mit einer Leitung zur Ladeluftabblasung ausgestattet sein, was aber aus energetischen Gründen Nachteile aufweist.

Erfmdungsgemäß werden sowohl in der ersten Abgasleitung 4' als auch in der zweiten Abgasleitung 4" Mittel 12', 12" vorgesehen, mit denen die beiden Abgasströme, welche durch die beiden Turbinen 6a, 7a geleitet werden, gesteuert werden können.

Bei der in Figur 1 dargestellten Ausführungsform ist das Mittel 12" zur Steuerung des Abgasmassenstroms in der zweiten Abgasleitung 4" ein Absperrelement 14". Mit Hilfe des Absperrelementes 14" kann der Strömungsquerschnitt der zweiten Abgasleitung 4" verändert werden, wobei eine Verkleinerung des Strömungsquerschnittes der zweiten Abgasleitung 4" zu einer Verkleinerung des Abgasmassenstromes durch die zweite Turbine 7a führt.

Das Mittel 12' zur Steuerung des Abgasmassenstroms in der ersten Abgasleitung 4' wird durch die erste Turbine 6a, welche eine variable Turbinengeometrie aufweist, gebildet, wobei durch Verstellen der Turbine 6a bzw. Verdrehen der Schaufeln dieser Turbine 6a in Richtung Querschnittsverkleinerung eine Verkleinerung des durch die erste Turbine 6a geführten Abgasmassenstroms erzielt wird. Die veränderbare Geometrie wird bei dieser Ausführungsform genutzt, um den Strömungswiderstand der Turbine 6a zu erhöhen und den durch die erste Turbine 6a strömenden Abgasmassenstrom zu steuern.

Alternativ oder zusätzlich kann in der ersten Abgasleitung 4' auch ein Absperrelement 14' vorgesehen werden, um den Abgasmassenstrom durch die erste Turbine 6a zu beeinflussen bzw. zu steuern, was durch ein gestrichelt dargestelltes Absperrelement 14' angedeutet ist. Ebenso könnte bei einer zu der ersten Ausführungsform der Brennkraftmaschine 1 alternativen Ausführungsform auf das Absperrelement 14" in der zweiten Abgasleitung 4" verzichtet werden und der Abgasmassenstrom durch die zweite Turbine 7a mittels variabler Turbinengeometrie beeinflußt bzw. gesteuert werden.

Dadurch, daß beide Abgasleitungen 4', 4" miteinander verbunden sind, kann der gesamte Abgasstrom sowohl vollständig durch die erste Turbine 6a als auch vollständig durch die zweite Turbine 7a geleitet werden. Eine Aufteilung der heißen Abgase auf beide Turbinen 6a, 7a ist grundsätzlich auch möglich, insbesondere eine asymmetrische Aufteilung, so daß eine Turbine 6a, 7a mit einem größeren Abgasstrom und die andere Turbine 6a, 7a mit einem kleineren Abgasstrom beaufschlagt werden kann.

Bei niedrigen Drehzahlen bzw. geringen Abgasmengen werden die in den Abgasleitungen 4', 4" vorgesehenen Mittel 12', 12" in der Art gesteuert, daß der wesentliche Anteil des Abgases durch die zweite, kleinere Turbine 7a, die auf kleine Abgasströme ausgelegt ist, geleitet wird.

Bei hohen Drehzahlen bzw. großen Abgasmengen werden die in den Abgasleitungen 4', 4" vorgesehenen Mittel 12', 12" dann in der Art gesteuert, daß der wesentliche Anteil des Abgases durch die erste, größere Turbine 6a, die auf große Abgasmassenströme ausgelegt ist, geleitet wird.

Die beiden Abgasleitungen 4', 4" der Brennkraftmaschine 1 münden stromabwärts der beiden Turbinen 6a, 7a in eine Gesamtabgasleitung 8, in der ein Partikelfilter 11 vorgesehen ist, vor den stromaufwärts ein Oxidationskatalysator 10 in der Gesamtabgasleitung 8 positioniert ist. Zusätzlich ist in der zweiten Abgasleitung 4" stromabwärts der zweiten Turbine 7a ein Oxidationskatalysator 9 angeordnet.

Bei niedrigen und mittleren Drehzahlen bzw. geringen Abgasmengen werden die in den Abgasleitungen 4', 4" vorgesehenen Mittel 12', 12" in der Art gesteuert, daß der wesentliche Anteil des Abgases bzw. das gesamte Abgas durch die zweite, kleinere Turbine 7a geleitet wird und den in der zweiten Abgasleitung 4" stromabwärts der zweiten Turbine 7a angeordneten ersten Oxidationskatalysator 9 durchströmt. Dieser in der zweiten Abgasleitung 4" angeordnete Oxidationskatalysator 9 ist damit sehr nahe an der Brennkraftmaschine 1 angeordnet, wodurch dieser Katalysator 9 seine Anspringtemperatur bereits nach kurzer Zeit erreicht, was insbesondere in der Warmlaufphase Vorteile aufweist. Die kleine Masse der zweiten, auf kleine Abgasmassen ausgelegten Turbine 7a trägt maßgeblich zu der vergleichsweise geringen thermische Trägheit der zweiten Abgasleitung 4" bei.

Bei niedrigen und mittleren Drehzahlen bzw. geringen Abgasmengen wird der Abgasmassenstrom durch die zweite Turbine 7a geleitet, weshalb auf einen zusätzlichen Oxidationskatalysator in der ersten Abgasleitung 4' stromabwärts der ersten Turbine 6a verzichtet werden. Gegebenenfalls die Turbine 6a passierende Abgase werden im Katalysator 10 konvertiert.

Der bei hohen Abgasmengen durch die erste Turbine 6a geleitete Abgasmassenstrom wird dann im zweiten Oxidationskatalysator 10 behandelt, der stromabwärts der Turbinen 6a, 7a in der Gesamtabgasleitung 8 vor dem Partikelfilter 11 vorgesehen werden.

Bei hohen Drehzahlen bzw. großen Abgasmengen werden die in den Abgasleitungen 4', 4" vorgesehenen Mittel 12', 12" in der Art gesteuert, daß der wesentliche Anteil des Abgases durch die erste, größere Turbine 6a geleitet wird. Die Oxidation der unverbrannten Kohlenwasserstoffe (HC) und von Kohlenmonoxid (CO) erfolgt dann in dem zweiten Oxidationskatalysator 10. Die mit der Oxidation verbundenen exothermen Reaktionen führen zu einer Temperaturerhöhung des Abgases in unmittelbarer Nähe zum Partikelfilter, was Vorteile im Hinblick auf die Filterregeneration hat.

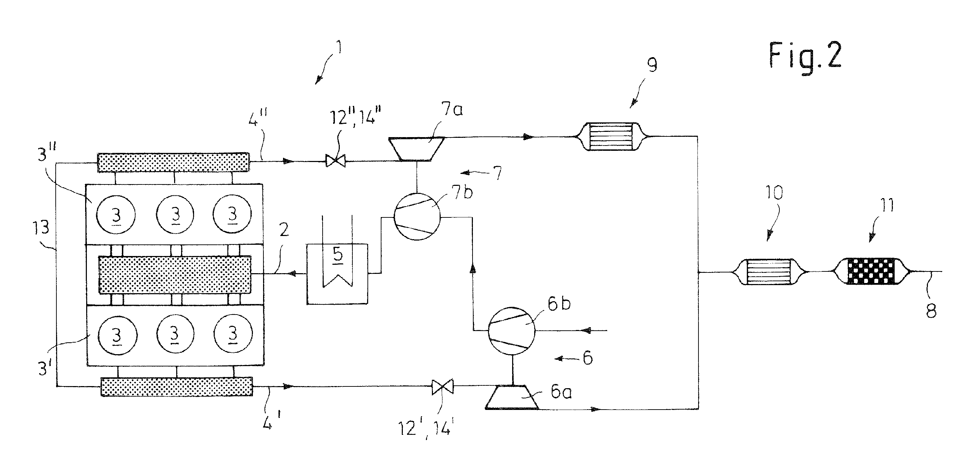

Figur 2 zeigt schematisch eine zweite Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 2 dargestellten Brennkraftmaschine 1 in der ersten Abgasleitung 4' ein Absperrelement 14' stromaufwärts der ersten Turbine 6a vorgesehen, um den Abgasmassenstrom durch die erste Turbine 6a zu beeinflussen bzw. zu steuern.

Zudem sind die beide Turbinen 6a, 7a mit einer festen d.h. unveränderlichen Turbinengeometrie ausgeführt. Im Gegensatz zu der zuvor beschriebenen Ausführungsform, bei der beide Turbinen mit einer variablen Geometrie (VTG) ausgeführt sind, entfällt hier prinzipbedingt eine Steuerung. Im ganzen weist diese Ausführungsform insbesondere Kostenvorteile auf.

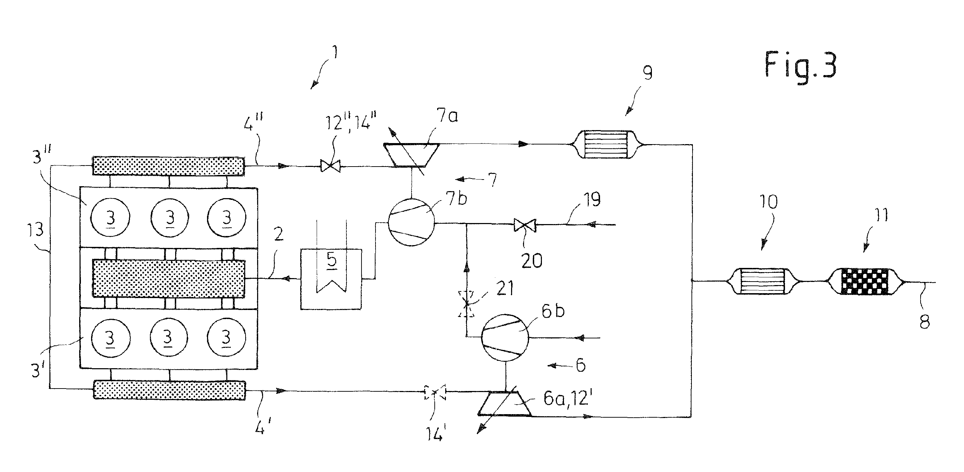

Figur 3 zeigt schematisch eine dritte Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 3 dargestellten Brennkraftmaschine 1 eine Bypaßleitung 19 mit einem Absperrelement 20 vorgesehen, mit der der zweite Verdichter 7b mit der Umgebung verbunden werden kann.

Diese Ausführungsform ist insbesondere bei niedrigen Drehzahlen bzw. kleinen Abgasmengen vorteilhaft, wenn der wesentliche Anteil des Abgases durch die zweite, kleinere Turbine 7a geleitet wird. Unter diesen Betriebsbedingungen arbeitet der erste, größere Verdichter 6b kaum bzw. gar nicht, so daß der zweite Verdichter 7b die Frischluft durch den ersten Verdichter 6b hindurch fördern d.h. ansaugen muß, was energetisch nachteilig ist. Zudem zieht der zweite Verdichter 7b beim Ansaugen der Frischluft Öl aus dem ersten Verdichter 6b, was insbesondere im Hinblick auf die Schadstoffemissionen nachteilig ist und durch Öffnen des Absperrelementes 20 und Ansaugen von Frischluft durch die Bypaßleitung 19 aus der Umgebung vermieden werden kann.

Zusätzlich kann in der Gesamtansaugleitung 2 zwischen den beiden Verdichtern 6b, 7b ein Absperrelement 21 vorgesehen werden, um den Frischluftstrom durch den ersten Verdichter 6b vollständig zu unterbinden, während der zweite Verdichter 7b Frischluft über die Bypaßleitung 19 aus der Umgebung ansaugt. Dieses Absperrelement 21 ist in Figur 3 gestrichelt angedeutet.

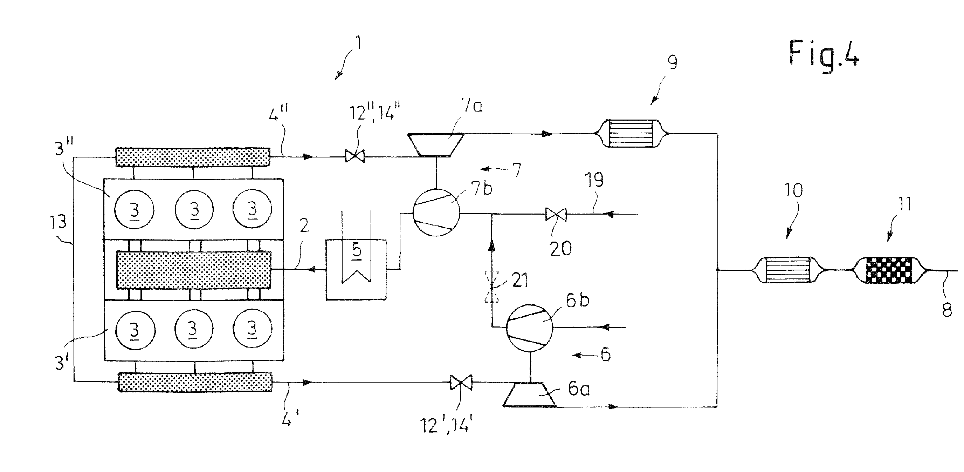

Figur 4 baut in gleicher Weise auf der Figur 2 auf wie Figur 3 auf der Figur 1 aufbaut. Die beiden Ausführungsformen unterscheiden sich jeweils durch die Anordnung einer Bypaßleitung 19, die es dem zweiten Verdichter 7b gestattet, Frischluft aus der Umgebung anzusaugen, einem in dieser Leitung 19 vorgesehenen Absperrelement 20, sowie einem zwischen den Verdichtern 6b, 7b in der Gesamtansaugleitung 2 angeordneten Absperrelement 21. Aus diesem Grund wird Bezug genommen auf die zuvor beschriebene Ausführungsform gemäß Figur 3. Für dieselben Bauteile wurden dieselben Bezugszeichen verwendet.

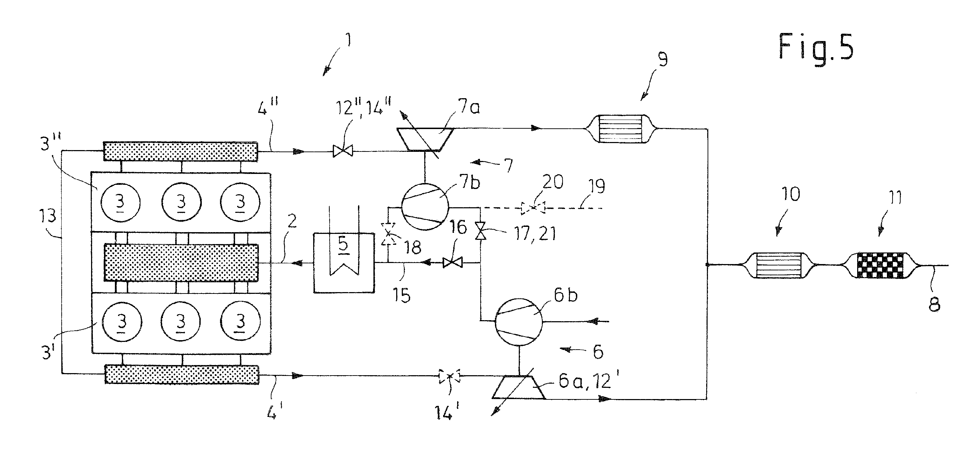

Figur 5 zeigt schematisch eine fünfte Ausführungsform der aufgeladenen Brennkraftmaschine 1. Es sollen nur die Unterschiede zu der in Figur 3 dargestellten Ausführungsform erörtert werden, weshalb im übrigen bezug genommen wird auf Figur 3. Für dieselben Bauteile wurden dieselben Bezugszeichen verwendet.

Im Unterschied zu der in Figur 3 dargestellten Ausführungsform ist bei der in Figur 5 dargestellten Brennkraftmaschine 1 der zweite Verdichter 7b mit einer zweiten Bypaßleitung 15 ausgestattet, die stromabwärts des ersten Verdichters 6b bzw. stromaufwärts des zweiten Verdichters 7b aus der Gesamtansaugleitung 2 abzweigt und stromabwärts des zweiten Verdichters 7b wieder in die Gesamtansaugleitung 2 einmündet, wobei in der zweiten Bypaßleitung 15 ein Absperrelement 16 vorgesehen ist, um den durch diese Bypaßleitung 15 strömenden Frischluftmassenstrom zu beeinflussen bzw. zu steuern.

Diese Ausführungsform der erfindungsgemäßen Brennkraftmaschine 1 ist insbesondere bei hohen Drehzahlen bzw. großen Abgasmengen vorteilhaft, wenn der wesentliche Anteil des Abgases durch die erste, größere Turbine 6a geleitet wird. Unter diesen Betriebsbedingungen arbeitet der zweite, kleinere Verdichter 7b kaum bzw. gar nicht, so daß der erste Verdichter 6b die Frischluft durch den zweiten Verdichter 7b hindurch fördern muß, was energetisch nachteilig ist, da der zweite Verdichter 7b einen Strömungswiderstand für die im ersten Verdichter 6b komprimierte Frischluft auf dem Weg zu den Zylindern 3 darstellt. Dabei sinkt der mittels des ersten Verdichters 6b generierte Ladedruck zwangsläufig.

Mit der in Figur 5 dargestellten Ausführungsform kann die Aufladung optimiert werden, indem durch Öffnen des Absperrelements 16 die zweite Bypaßleitung 15 freigegeben wird und der erste Verdichter 6b über die zweite Bypaßleitung 15 und am zweiten Verdichter 7b vorbei fördert.

Dabei kann Frischluft in den zweiten Verdichter 7b hineingelangen. Um die Durchströmung des zweiten Verdichters 7b aber vollständig zu unterbinden, wird stromaufwärts des zweiten Verdichters 7b stromab der Abzweigung der zweiten Bypaßleitung 15 ein Absperrelement 17 in der Gesamtansaugleitung 2 vorgesehen. Dadurch wird die aus dem ersten Verdichter 6b kommende Frischluftströmung bei geschlossenem Absperrelement 17 zwangsweise in die Bypaßleitung 15 gelenkt.

Zudem wird stromabwärts des zweiten Verdichters 7b vor der Einmündung der zweiten Bypaßleitung 15 ein Absperrelement 18 in der Gesamtansaugleitung 2 vorgesehen. Durch Schließen dieses Absperrelements 18 wird ein Rückströmen der Ladeluft in den zweiten Verdichter 7b vermieden.

Die bei der in Figur 5 dargestellten Ausführungsform zusätzlich vorgesehene Bypaßleitung 15 und die zusätzlichen Absperrelemente 16, 17 gestatten es, die beiden Verdichter 6b, 7b parallel zu betreiben und somit zwischen einer zweistufigen und einstufigen Aufladung zu wechseln, sofern eine zusätzliche Bypaßleitung 19 vorgesehen ist.

Des weiteren kann eine zusätzliche Bypaßleitung 19 vorgesehen werden, die gestrichelt gezeichnet angedeutet ist und mit der der zweite Verdichter 7b Frischluft aus der Umgebung ansaugen kann.

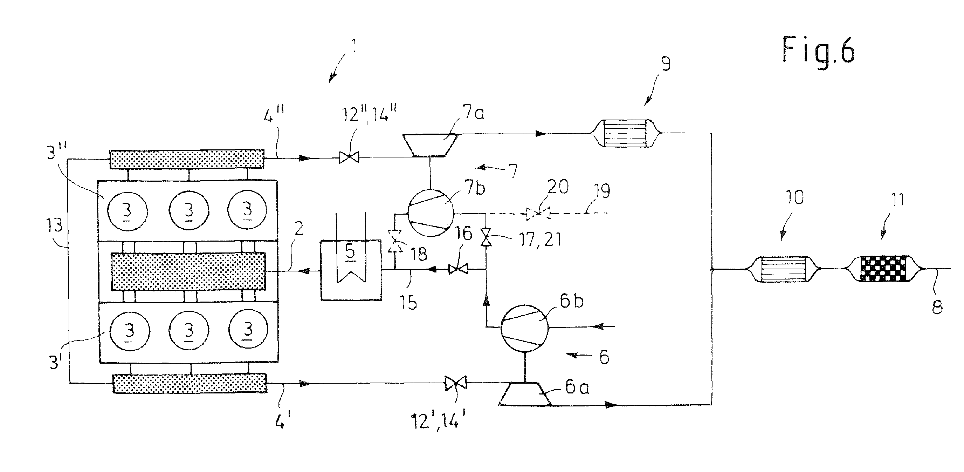

Figur 6 zeigt schematisch eine sechste Ausführungsform der Brennkraftmaschine 1. Figur 6 baut in gleicher Weise auf Figur 4 auf wie Figur 5 auf Figur 3 aufbaut. Die Ausführungsformen unterscheiden sich durch die Anordnung einer Bypaßleitung 15, einem in dieser Bypaßleitung 15 vorgesehenen Absperrelement 16, sowie den beiden in der Gesamtansaugleitung 2 angeordneten Absperrelementen 17, 18. Aus diesem Grund wird Bezug genommen auf die zuvor beschriebene Ausführungsform gemäß Figur 5. Für dieselben Bauteile wurden dieselben Bezugszeichen verwendet.

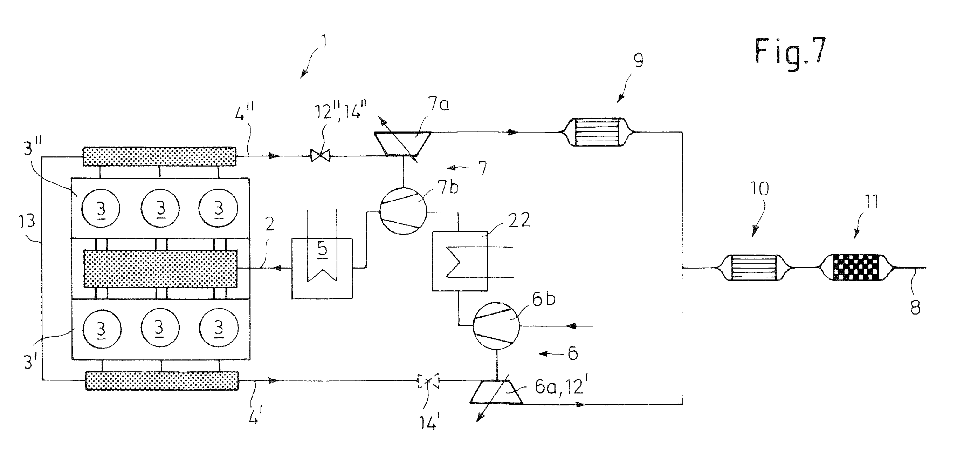

Figur 7 zeigt schematisch eine siebte Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 7 dargestellten Brennkraftmaschine 1 zwischen den Verdichtern 6b, 7b ein zweiter Ladeluftkühler 22 in der Gesamtansaugleitung 2 angeordnet ist. Die im ersten Verdichter 6b vorverdichtete Verbrennungsluft, die sich im Rahmen der Vorverdichtung erwärmt, wird auf diese Weise vor Eintritt in den zweiten Verdichter 7b heruntergekühlt, was zu einer verbesserten Zylinderfüllung beiträgt und damit die Qualität der Aufladung weiter verbessert.

Eine derartige Zwischenkühlung 22 der Verbrennungsluft kann bei den Ausführungsformen gemäß den Figuren 2 bis 6 ebenfalls vorgesehen werden.

### Bezugszeichen

- 1: aufgeladene Brennkraftmaschine
- 2: Gesamtansaugleitung
- 3: Zylinder
- 3': erste Zylindergruppe
- 3": zweite Zylindergruppe
- 4': erste Abgasleitung
- 4": zweite Abgasleitung
- 5: Ladeluftkühler
- 6: erster Abgasturbolader
- 6a: erste Turbine
- 6b: erster Verdichter
- 7: zweiter Abgasturbolader
- 7a: zweite Turbine
- 7b: zweiter Verdichter
- 8: Gesamtabgasleitung
- 9: erster Oxidationskatalysator
- 10: zweiter Oxidationskatalysator
- 11: Partikelfilter
- 12': Mittel zur Steuerung des Abgasmassenstromes in der ersten Abgasleitung
- 12": Mittel zur Steuerung des Abgasmassenstromes in der zweiten Abgasleitung
- 13: Verbindungsleitung
- 14': Absperrelement
- 14": Absperrelement
- 15: zweite Bypaßleitung
- 16: Absperrelement
- 17: Absperrelement
- 18: Absperrelement
- 19: erste Bypaßleitung
- 20: Absperrelement
- 21: Absperrelement
- 22: Ladeluftkühler, Zwischenkühlung

- VTG: variable Turbinengeometrie
- WG: variable Verdichtergeometrie

## Patentansprüche

1. Aufgeladene Brennkraftmaschine (1) mit mindestens zwei Zylindern (3), die in der Art konfiguriert sind, daß sie zwei Gruppen (3', 3") mit jeweils mindestens einem Zylinder (3) bilden, wobei beide Zylindergruppen (3', 3") jeweils mit einer Abgasleitung (4', 4") ausgestattet sind, und mit zwei Abgasturboladern (6, 7), deren Turbinen (6a, 7a) parallel geschaltet sind, indem eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist, und deren Verdichter (6b,7b) in Reihe geschaltet sind, indem ein erster Verdichter (6b) des ersten Abgasturboladers (6) in einer Gesamtansaugleitung (2), die zur Versorgung der Brennkraftmaschine (1) mit Frischluft bzw. Frischgemisch dient, angeordnet ist und ein zweiter Verdichter (7b) des zweiten Abgasturboladers (7) stromabwärts des ersten Verdichters (6b) in dieser Gesamtansaugleitung (2) angeordnet ist, **dadurch gekennzeichnet, daß**
■ die Abgasleitungen (4',4") der beiden Zylindergruppen (3', 3") stromaufwärts der beiden Turbinen (6a, 7a) mittels einer Verbindungsleitung (13) miteinander verbunden sind, und
■ sowohl in der ersten Abgasleitung (4') als auch in der zweiten Abgasleitung (4") Mittel (12', 12") vorgesehen sind, mit denen die Größe der beiden durch die Turbinen (6a, 7a) geführten Abgasmassenströme steuerbar ist.

2. Aufgeladene Brennkraftmaschine (1) nach Anspruch 1, **dadurch gekennzeichnet, daß** der erste Verdichter (6b) größer ausgelegt ist als der zweite Verdichter (7b).

3. Aufgeladene Brennkraftmaschine (1) nach Anspruch 1 oder 2, **dadurch gekennzeichnet, daß** die erste Turbine (6a) größer ausgelegt ist als die zweite Turbine (7a).

4. Aufgeladene Brennkraftmaschine (1) nach einem der vorherigen Ansprüche, **dadurch gekennzeichnet, daß** die erste Turbine (6a) eine variable Turbinengeometrie aufweist.

5. Aufgeladene Brennkraftmaschine (1) nach Anspruch 4, **dadurch gekennzeichnet, daß** die erste Turbine (6a) das Mittel (12') zur Steuerung des Abgasmassenstroms in der ersten Abgasleitung (4') bildet, wobei durch Verstellen der Turbine (6a) in Richtung Querschnittsverkleinerung eine Verkleinerung des durch die erste Turbine (6a) geführten Abgasmassenstroms realisierbar ist.

6. Aufgeladene Brennkraftmaschine (1) nach einem der vorherigen Ansprüche, **dadurch gekennzeichnet, daß** der erste Verdichter (6b) eine variable Verdichtergeometrie aufweist.

7. Aufgeladene Brennkraftmaschine (1) nach einem der vorherigen Ansprüche, **dadurch gekennzeichnet, daß** eine erste Bypaßleitung (19) vorgesehen ist, die stromabwärts des ersten Verdichters (6b) und stromaufwärts des zweiten Verdichters (7b) in die Gesamtansaugleitung (2) mündet.

8. Aufgeladene Brennkraftmaschine (1) nach Anspruch 7, **dadurch gekennzeichnet, daß** in der ersten Bypaßleitung (19) ein Absperrelement (20) vorgesehen ist.

9. Aufgeladene Brennkraftmaschine (1) nach einem der vorherigen Ansprüche, **dadurch gekennzeichnet, daß** die zweite Turbine (7a) eine variable Turbinengeometrie aufweist.

10. Aufgeladene Brennkraftmaschine (1) nach Anspruch 9, **dadurch gekennzeichnet, daß** die zweite Turbine (7a) das Mittel (12") zur Steuerung des Abgasmassenstroms in der zweiten Abgasleitung (4") bildet, wobei durch Verstellen der Turbine (7a) in Richtung Querschnittsverkleinerung eine Verkleinerung des durch die zweite Turbine (7a) geführten Abgasmassenstroms realisierbar ist.

11. Aufgeladene Brennkraftmaschine (1) nach einem der vorherigen Ansprüche, **dadurch gekennzeichnet, daß** der zweite Verdichter (7b) eine variable Verdichtergeometrie aufweist.

12. Aufgeladene Brennkraftmaschine (1) nach einem der vorherigen Ansprüche, **dadurch gekennzeichnet, daß** der zweite Verdichter (7b) mit einer zweiten Bypaßleitung (15) ausgestattet ist, die stromaufwärts des zweiten Verdichters (7b) aus der Gesamtansaugleitung (2) abzweigt und stromabwärts des zweiten Verdichters (7b) in die Gesamtansaugleitung (2) einmündet.

13. Aufgeladene Brennkraftmaschine (1) nach Anspruch 12, **dadurch gekennzeichnet, daß** in der zweiten Bypaßleitung (15) ein Absperrelement (16) vorgesehen ist.

14. Aufgeladene Brennkraftmaschine (1) nach einem der vorherigen Ansprüche, **dadurch gekennzeichnet, daß** die beiden Abgasleitungen (4', 4") stromabwärts der beiden Turbinen (6a, 7a) in eine Gesamtabgasleitung (8) münden.

15. Aufgeladene Brennkraftmaschine (1) nach Anspruch 14, **dadurch gekennzeichnet, daß** in der Gesamtabgasleitung (8) mindestens ein Abgasnachbehandlungssystem (10, 11) vorgesehen ist.

16. Aufgeladene Brennkraftmaschine (1) nach Anspruch 14 oder 15, **dadurch gekennzeichnet, daß** in der zweiten Abgasleitung (4") stromabwärts der zweiten Turbine (7a) mindestens ein Abgasnachbehandlungssystem (9) vorgesehen ist.

17. Verfahren zum Betreiben einer aufgeladenen Brennkraftmaschine (1) nach Anspruch 1, **dadurch gekennzeichnet, daß**
■ die erste Turbine (6a) größer ausgelegt wird als die zweite Turbine (7a),
■ der erste Verdichters (6b) größer ausgelegt wird als der zweite Verdichter (7b), und
■ bei niedrigen Drehzahlen bzw. kleinen Abgasmengen die in der ersten Abgasleitung (4') und in der zweiten Abgasleitung (4") vorgesehenen Mittel (12', 12") in der Art gesteuert werden, daß der wesentliche Anteil des Abgases durch die zweite Turbine (7a) geführt wird d.h. der durch die zweite Turbine (7a) geleitete Abgasmassenstrom größer ist als der durch die erste Turbine (6a) geleitete Abgasmassenstrom, und
■ bei hohen Drehzahlen bzw. großen Abgasmengen die in der ersten Abgasleitung (4') und in der zweiten Abgasleitung (4") vorgesehenen Mittel (12', 12") in der Art gesteuert werden, daß der wesentliche Anteil des Abgases durch die erste Turbine (6a) geführt wird d.h. der durch die erste Turbine (6a) geleitete Abgasmassenstrom größer ist als der durch die zweite Turbine (7a) geleitete Abgasmassenstrom.

18. Verfahren nach Anspruch 17, **dadurch gekennzeichnet, daß**
■ in der zweiten Abgasleitung (4") stromabwärts der zweiten Turbine (7a) ein Oxidationskatalysator vorgesehen wird, und
■ nach einem Kaltstart bzw. in der Warmlaufphase die in der ersten Abgasleitung (4') und in der zweiten Abgasleitung (4") vorgesehenen Mittel (12', 12") in der Art gesteuert werden, daß der wesentliche Anteil des Abgases durch die zweite Turbine (7a) geführt wird d. h. der durch die zweite Turbine (7a) geleitete Abgasmassenstrom größer ist als der durch die erste Turbine (6a) geleitete Abgasmassenstrom.
